(19) Europäisches Patentamt
European Patent Office
Office européen des brevets

(11) Publication number : **0 287 281 B1**

(12) **EUROPEAN PATENT SPECIFICATION**

(45) Date of publication of patent specification :
**02.01.92 Bulletin 92/01**

(51) Int. Cl.⁵ : **A21D 8/08,** A23D 7/00, A23D 9/00

(21) Application number : **88303133.8**

(22) Date of filing : **07.04.88**

(54) **Pan-releasing type oil composition.**

(30) Priority : **08.04.87 JP 86114/87**
**28.09.87 JP 243494/87**

(43) Date of publication of application :
**19.10.88 Bulletin 88/42**

(45) Publication of the grant of the patent :
**02.01.92 Bulletin 92/01**

(84) Designated Contracting States :
**CH DE ES FR GB LI NL**

(56) References cited :
**EP-A- 0 141 442**
**EP-A- 0 157 531**
**GB-A- 2 002 806**
**GB-A- 2 149 811**
**US-A- 3 108 015**

(73) Proprietor : **Kao Corporation**
**14-10, Nihonbashi Kayabacho 1-chome**
**Chuo-Ku Tokyo 103 (JP)**

(72) Inventor : **Yasukawa, Tukuji**
**Kaoshataku 1-205 8762-23 Yatabe**
**Hazaki-machi**
**Kashima-gun Ibaraki (JP)**
Inventor : **Nishide, Tsutomu**
**Kaodoairyo 8762-23 Yatabe Hazaki-machi**
**Kishima-gun Ibaraki (JP)**
Inventor : **Yasumura, Daisuke**
**Kaodoairyo 8762-23 Yatabe Hazaki-machi**
**Kishima-gun Ibaraki (JP)**

(74) Representative : **Bannerman, David Gardner et al**
**Withers & Rogers 4 Dyer's Buildings Holborn**
**London, EC1N 2JT (GB)**

EP 0 287 281 B1

## Description

The present invention relates to a pan-releasing type oil composition. The invention relates more particularly to an oil composition which at least reduces the tendency of food materials to stick to cooking utensils etc. at the time of cooking, and is free from the browning and colouring of phospholipids due to heating or the emission of a bad smell caused by the thermal decomposition and denaturation of phospholipids.

At the time of manufacture of cakes and bread or during the cooking of roasted and fried foods, fats and oils are used for the purpose of preventing the food materials from sticking to the cooking utensils. It is already known that among the various surface active substances, only lecithin is specifically effective for the separation of food materials which tend to stick as a result of heating, such as sponge cake dough. Fats and oils in which soybean lecithin has been added to and dissolved in vegetable oils have therefore been used as pan-releasing oils.

In such a case, the lecithin is a phospholipid mixture having phosphatidyl choline, phosphatidyl ethanolamine, or the like as its main ingredient. A representative example is lecithin obtained by extraction or purification of soybeans or egg yolk.

Natural lecithins such as soybean lecithin and egg yolk lecithin are very unstable substances ; they become coloured dark brown when heated to temperatures above 150°C even if they are protected by the presence of fats and oils. Further, they suffer the disadvantage that they emit bad or offensive smells resulting from the decomposition products of lecithin. Accordingly, their application methods and amounts of them used are considerably restricted.

Hydroxylated lecithin has also been proposed as a pan-releasing type oil (U.S. Patent no.3661605), and also lecithin with an hydrophilic/lyophilic balance (HLB) value within a specific range (U.S. Patent no.3896975). These prior art proposals however, are not intended to overcome the above described disadvantages (coloration and emission of offensive smells) of lecithin.

For the purpose of preventing lecithin from browning on heating, succinic acid or sodium succinate have been added (Published Examined Japanese Patent Application No. 48520/86), acidic amino acid and basic amino acid have been added (Published Unexamined Japanese Patent Application No. 126206/79), and sodium glutamate has been added (Published Unexamined Japanese Patent Application No. 127408/79). However, these proposals do not lead to the substantial removal of the aforesaid disadvantages.

The inventors have made earnest studies in order to obtain a food separation type oil which is not only excellent in food separation effect but is free from discoloration and the emission of unpleasant smells on heating, and is widely applicable.

As described previously, natural lecithins such as soybean lecithin and egg yolk lecithin have phospholipids such as phosphatidyl choline and phosphatidyl ethanolamine as their main ingredients. Nitrogen-containing compounds such as choline, ethanolamine, etc. contained therein are very unstable on heating ; they are readily discolored and emit bad smells when heated. The inventors have discovered that this discoloration and emission of bad smells can be greatly modified whilst retaining excellent food separation capacity by decreasing the content of phosphatidyl choline and phosphatidyl ethanolamine in phospholipids and increasing the content of phosphatidic acid and lysophosphatidic acid by enzyme treatment (treatment with phospholipase D and phospholipase A2), fractionation treatment, etc. using the natural lecithins as starting materials.

The present invention is based on this finding.

Thus according to the present invention we provide a pan-releasing oil composition comprising a fat and/or oil and from 0.1 to 10% by weight of said fat and/or oil of a phospholipid mixture in which the sum of the content of phosphatidic acid or/and a salt thereof is more than 15% by weight and preferably from 30 to 100% by weight, of the total phospholipid.

The composition preferably comprises 90 to 99.9 percent by weight of the fats and/or oils and 0.1 to 10 percent by weight of the phospholipid mixture.

The composition may also contain one or more further components such as anti-oxidants, emulsifiers, ethyl alcohols and flavoring additives.

Thus, the composition may include an anti-oxidant such as tocopherol and a spice extract, an emulsifier such as a sucrose ester with an aliphatic acid, sorbitan ester with an aliphatic acid, a glyceride and propylene glycol ester with an aliphatic acid(s), to make the phospholipid more soluble, and/or a flavoring additive.

By the amount of total phospholipids we mean the amount of phospholipids in the form of acetone-insoluble matter as described in the Food Additive Regulation Papers of Japan.

Possible salts include sodium, potassium, calcium, magnesium, aluminium and ammonium salts.

The phospholipid mixture having the specific composition prescribed in the invention can be obtained by methods such as decomposition of phosphatidyl choline and phosphatidyl ethanolamine, namely formation of phosphatidic acid and lysophosphatidic acid, with enzymes using natural lecithins as staring materials, solvent fractionation thereof, fractionation by ion exchange column and silicate column ; electrodialysis ; etc.

An especially preferred method comprises selectively decomposing phosphatidyl choline and phosphatidyl ethanolamine from soybean lecithin or egg yolk lecithin using phospholipase D which is abundantly present in cabbage, etc. thereby decreasing the content of them and increasing the content of phosphatidic acid or/and sodium, calcium and other salts thereof.

The phoopholipid mixture thus obtained according to the invention is admixed with fat and oil, to produce a composition having a total phosphotidyl content of 0.1 to 10% by weight, preferably 0.5-5% by weight, so that a pan-releasing oil composition is obtained which has both excellent release properties and is also free from discolorations and unpleasant smells when heated.

Examples of the fat and oil used in the invention include vegetable fats and oils such as soybean oil, rapeseed soil, palm oil, corn oil, cotton seed oil, coconut oil, palm kernel oil, rice oil, sesame oil, safflower oil, high oleic safflower oil, sunflower oil, high oleic sunflower oil, etc. ; animal fats and oils such as beef tallow, lard, fish oil, whale oil, milk fat, etc. ; fractionated oils thereof ; hydrogentated or ester-interchanged oils thereof; etc. Mixtures of two or more fats and/or oils may be employed.

Non-limiting examples of pan-releasing oil compositions according to the invention will be described in more detail hereinafter, together with comparative examples.

Examples 1 to 3 and Comparative Examples 1 to 3

Using soybean lecithin of high purity (acetone-insoluble content : more than 95%) as a starting material, the soybean lecithin was treated with phospholipase D and phospholipase A2, to obtain three kinds of phospholipid mixtures (Table 1, Samples 1 to 3) in which the content of phosphatidyl choline and phosphatidyl ethanolamine in the total phospholipid is decreased and the content of phosphatidic acid (and calcium salt of phosphatidic acid) and lysophosphatidic acid (and calcium salt of lysophosphatidic acid) is increased. For the purpose of comparison, the compositions of phospholipids of soybean lecithin and egg yolk lecithin were respectively shown as Comparative Samples 1 and 2 in Table 1.

These phospholipid mixtures were admixed with rapeseed oil to prepare food separation type oil compositions having a total phospholipid content of 0.1, 0.5, 1.0, 5.0 or 10.0% by weight (acetone-insoluble content). Using the respective oil compositions, the cooking of thick eggroll with an iron frying pan was evaluated. For the purpose of comparison, the cooking was evaluated in the same manner as rapeseed oil without the addition of phospholipid mixture.

The results obtained are shown in Table 2.

Table 1. Compositions of the phospholipid mixtures of

the invention (Samples 1 to 3) and phospholipid

mixtures for comparison (Comparative Samples 1 and 2).

| Sample          No. | Samples | | | Comparative Samples | |
|---|---|---|---|---|---|
| | 1 | 2 | 3 | 1 | 2 |
| Origin | Soybean lecithin | | | Soybean lecithin | Yolk lecithin |
| Acetone-insoluble content[1] (%) | 97.2 | 96.8 | 96.2 | 95.9 | 96.8 |
| PC content[2] (%) | 13.1 | 0.1 | 0.1 | 29.3 | 71.8 |
| PE content[3] (%) | 18.7 | 10.5 | 0.3 | 21.1 | 15.4 |
| PI content[4] (%) | 18.9 | 23.1 | 11.2 | 15.8 | — |
| PA + LPA content[5] (%) | 15.3 | 31.0 | 56.4 | 11.8 | 0.6 |

Note 1) Acetone-insoluble content :
Lecithin content described in the Food Additive Regulation Papers of Japan.
Note 2) PC content :
Content (% by weight) of phosphatidyl choline in acetone-insoluble matters.
Analytical value by Thin Layer Chromatography (TLC) in accordance with Standard Fats and Oils Analytical Test Methods (2.2.8.4.a.86, Phosphorus Composition of Phospholipid) compiled by Japanese Oil Chemistry Association.
Note 3) PE content : Content (% by weight) of phosphatidyl ethanolamine in acetone-insoluble matters.
Analytical value by TLC in accordance with Standard Fats and Oils Analytical Test Methods (2.2.8.4.a.86, Phosphorus Composition of Phospholipid) compiled by Japanese Oil Chemistry Association.
Note 4) PI content :
Content (% by weight) of phosphatidyl inositol in acetone-insoluble matters.
Analytical value by TLC in accordance with Standard Fats and Oils Analytical Test Methods (2.2.8.4.a.86, Phosphorus Composition of Phospholipid) compiled by Japanese Oil Chemistry Association.
Note 5) PA + LPA content :
Sum of the content of phosphatidic acid (and calcium salt of phosphatidic acid) and the content of lysophosphatidic acid (and calsium salt of lysophosphatidic acid) in acetone-insoluble matters.
Analytical value by TLC in accordance with Standard Fats and Oils Analytical Test Methods (2.2.8.4.a.86, Phosphorus Composition of Phospholipid) compiled by Japanese Oil Chemistry Association.

Table 2. Evaluation of the application of pan-releasing oils prepared by admixing the phospholipid mixtures of Table 1 with rapeseed oil to form a composition having a total phospholipid content of 0.1, 0.5, 1.0, 5.0 or 10.0% by weight.

| Example and Comparative Example No. | Sample | Total phospholipid content (wt.%) | Evaluation of applied cooking [7] | | |
|---|---|---|---|---|---|
| | | | Smell at the time of heating | Scorching [8] | Coloring of fats and oils after heating |
| Comparative Example 1 | Rapeseed oil (control) | — | ◉ (no) | 10/10 | ◉ (no) |
| Example 1 | Sample 1 | 0.1 | ◉ (no) | 3/10 | ◉ (no) |
| | | 0.5 | ◉ (no) | 0/10 | ○ (almost no) |
| | | 1.0 | ○ (almost no) | 0/10 | △ (slightly) |
| | | 5.0 | ○ (almost no) | 0/10 | △ (slightly) |
| | | 10.0 | △ (slightly) | 0/10 | × (fairly) |
| Example 2 | Sample 2 | 0.1 | ◉ (no) | 2/10 | ◉ (no) |
| | | 0.5 | ◉ (no) | 0/10 | ○ (almost no) |
| | | 1.0 | ◉ (no) | 0/10 | ○ (almost no) |
| | | 5.0 | ○ (almost no) | 0/10 | △ (slightly) |
| | | 10.0 | ○ (almost no) | 0/10 | △ (slightly) |
| Example 3 | Sample 3 | 0.1 | ◉ (no) | 2/10 | ◉ (no) |
| | | 0.5 | ◉ (no) | 0/10 | ○ (almost no) |
| | | 1.0 | ◉ (no) | 0/10 | ○ (almost no) |
| | | 5.0 | ○ (almost no) | 0/10 | ○ (almost no) |
| | | 10.0 | ○ (almost no) | 0/10 | △ (slightly) |

Table 2 (Continued)

| Example and Comparative Example No. | Sample | Total phospholipid content (wt.%) | Evaluation of applied cooking[7] | | |
|---|---|---|---|---|---|
| | | | Smell at the time of heating | Scorching[8] | Coloring of fats and oils after heating |
| Comparative Example 2 | Comparative Sample 1 | 0.1 | △ (slightly) | 4/10 | △ (slightly) |
| | | 0.5 | △ (slightly) | 2/10 | × (fairly) |
| | | 1.0 | × (fairly) | 1/10 | × (fairly) |
| | | 5.0 | × × (remarkably) | 0/10 | × × (remarkably) |
| | | 10.0 | × × (remarkably) | 0/10 | × × (remarkably) |
| Comparative Example 3 | Comparative Sample 2 | 0.1 | △ (slightly) | 6/10 | △ (slightly) |
| | | 0.5 | × (fairly) | 2/10 | × (fairly) |
| | | 1.0 | × × (remarkably) | 1/10 | × × (remarkably) |
| | | 5.0 | × × (remarkably) | 0/10 | × × (remarkably) |
| | | 10.0 | × × (remarkably) | 0/10 | × × (remarkably) |

- 12 -

Note 6) Amount (% by weight) of phospholipid mixture added in the form of acetone-insoluble matters.

Note 7) After applying 0.5 g of the pan-releasing oil on an iron frying pan (24 cm), two whole eggs (about 100 g) were roasted in five times to prepare thick eggroll. About 5 minutes were required for the cooking a time.

Note 8) In the repetition of the evaluation of the above-described Note 7) 10 times, the number of times when the scorching occurred was shown. For example, 8/10 means that the scorching occurred 8 times out of 10 times.

It is apparent from the results of Table 2 that the pan-releasing oil composition of the present invention is not only free from the scorching at the time of heating and excellent in the pan-releasing effect, but also free or almost free from the coloring and the emission of a smell (bad smell) at the time of heating and widely applicable. It is very suitable for and useful as the pan-releasing oil composition.

## Claims

1. A pan-releasing oil composition which comprises at least one fat and/or oil and 0.1 to 10 percent by weight, based on the weight of the whole composition, of a phospholipid mixture in which the total of contents of phosphatidic acid and/or a salt thereof and lysophosphatidic acid and/or a salt thereof is from 15 to 100 percent by weight based on the weight of the total phospholipids.

2. A composition as claimed in claim 1, in which said salt is a sodium, potassium, calcium, magnesium, aluminum or ammonium salt.

3. A composition as claimed in claim 1, in which the total of phosphatidic acid or lysophosphatidic acid or salts thereof is from 30 to 100 percent by weight of the weight of the total phospholipids.

4. A composition as claimed in claim 1, which comprises 90 to 99.9 percent by weight of the fats and/or oils and 0.1 to 10 percent by weight of the phospholipid mixture.

5. A composition as claimed in claim 1 or 4, which further comprises an anti-oxidant, an emulsifier, ethyl alcohol or a flavoring agent.

6. A composition as claimed in claim 1, which comprises 0.5 to 5 percent by weight of the phospholipid mixture.

## Patentansprüche

1. Trennmittel auf Ölbasis, das mindestens ein Fett und/oder Öl sowie zwischen 0.1 und 10 Gew.-%, bezogen auf das Gewicht der Gesamtmischung, einer Phospholipidmischung enthält, in der die Gesamtmenge an Phosphatidsäure und/oder eines ihrer Salze und an Lysophosphatidsäure und/oder eines ihrer Salze zwischen 15 und 100 Gew.-%, bezogen auf die Phospholipid-Gesamtmenge, beträgt.

2. Trennmittel nach Anspruch 1, bei dem das Salz ein Natrium-, Kalium-, Calcium-, Magnesium-, Aluminium- oder Ammoniumsalz ist.

3. Trennmittel nach Anspruch 1, bei dem die Gesamtmenge an Phosphatidsäure bzw. Lysophosphatidsäure bzw. deren Salze zwischen 30 und 100 Gew.-%, bezogen auf die Phospholipidgesamtmenge, beträgt.

4. Trennmittel nach Anspruch 1, das zwischen 90 und 99,9 Gew.-% Fett und/oder Öl sowie zwischen 0.1 und 10 Gew.-% Phospholipidmischung enthält.

5. Trennmittel nach Anspruch 1 oder 4, das außerdem einen Oxidationsinhibitor, einen Emulgator, Ethanol oder einen Aromastoff enthält.

6. Trennmittel nach Anspruch 1, das zwischen 0.5 und 5 Gew.-% Phospholipidmischung enthält.

## Revendications

1. Composition d'huile antiadhérente pour récipients de cuisson, qui comprend au moins une graisse et/ou une huile et 0,1 à 10 pour cent en poids, par rapport au poids de la composition totale, d'un mélange de phospholipides dans lequel le total des teneurs en acide phosphatidique et/ou un sel de celui-ci et en acide lysophosphatidique et/ou un sel de celui-ci est de 15 à 100 pour cent en poids par rapport au poids des phospholipides totaux.

2. Composition selon la revendication 1, dans laquelle ledit sel est un sel de sodium, potassium, calcium, magnésium, aluminium ou ammonium.

3. Composition selon la revendication 1, dans laquelle le total de l'acide phosphatidique ou de l'acide lysophosphatidique ou de leurs sels est de 30 et 100 pour cent en poids par rapport au poids des phospholipides totaux.

4. Composition selon la revendication 1, qui comprend 90 à 99,9 pour cent en poids des graisses et/ou huiles et 0,1 à 10 pour cent en poids du mélange de phospholipides.

5. Composition selon la revendication 1 ou 4, qui contient de plus un antioxydant, un émulsionnant, de l'alcool éthylique ou un agent aromatisant.

6. Composition selon la revendication 1, qui contient 0,5 à 5 pour cent en poids du mélange de phospholipides.